(19) Europäisches Patentamt
European Patent Office
Office européen des brevets

(11) **EP 3 789 259 A1**

(12) **DEMANDE DE BREVET EUROPEEN**

(43) Date de publication:
**10.03.2021 Bulletin 2021/10**

(51) Int Cl.:
**B60W 30/16** *(2020.01)*      **B60W 50/14** *(2020.01)*

(21) Numéro de dépôt: **20192100.4**

(22) Date de dépôt: **21.08.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **05.09.2019 FR 1909797**

(71) Demandeur: **Renault S.A.S.**
**92100 Boulogne-Billancourt (FR)**

(72) Inventeurs:
- **GONZALEZ BAUTISTA, David**
  **78210 Saint Cyr l'école (FR)**
- **MILANES, Vicente**
  **92100 Boulogne-Billancourt (FR)**
- **MAHTOUT, Imane**
  **95200 Sarcelles (FR)**
- **NAVAS MATOS, Francisco Martin**
  **75013 PARIS (FR)**

(54) **PROCÉDÉ DE GESTION D'UNE DISTANCE DE SÉCURITÉ**

(57) Procédé de gestion d'une distance de sécurité (D) entre un premier véhicule (1) et un deuxième véhicule (12) précédant le premier véhicule (1), caractérisé en ce qu'il comprend :
- une étape d'identification (E1) du deuxième véhicule (12),
- une étape de détermination (E2) d'une capacité maximale de freinage du deuxième véhicule (12) en fonction de son identification,

- une étape de calcul (E3) d'une première distance de référence (D1) en fonction de la capacité maximale de freinage du deuxième véhicule (12),
- une étape de calcul (E4) d'une deuxième distance de référence (D2) entre le premier véhicule (1) et le deuxième véhicule (12), la deuxième distance de référence (D2) étant égale à une distance de sécurité minimale entre le premier véhicule (1) et le deuxième véhicule (12) garantissant une stabilité en chaîne.

Fig. 2

**Description**

**Domaine Technique de l'invention**

L'invention concerne un procédé de gestion d'une distance de sécurité entre un premier véhicule et un deuxième véhicule, le deuxième véhicule précédant le premier véhicule, notamment le premier véhicule étant équipé d'un système de régulation de distance de type "ACC" pour « Adaptive Cruise Control » selon la terminologie anglo-saxonne. L'invention porte aussi sur un véhicule automobile comprenant des moyens matériels et/ou logiciels mettant en œuvre un tel procédé de gestion.

**Etat de la technique antérieure**

Les véhicules automobiles peuvent être équipés d'un système de régulation de distance de type "ACC". De tels systèmes comprennent un moyen de détection, tel qu'un radar, un lidar ou une caméra apte à scanner l'environnement devant un véhicule. Ils permettent de détecter automatiquement des obstacles ou d'autres véhicules circulant sur une chaussée. Notamment, de tels systèmes permettent d'adapter la vitesse d'un premier véhicule en fonction de la vitesse d'un deuxième véhicule précédant le premier véhicule. On peut ainsi réaliser des fonctions de suivi automatique du deuxième véhicule en conservant une distance de sécurité sensiblement constante entre les deux véhicules. Ces systèmes permettent également de réguler la vitesse du premier véhicule autour d'une valeur de consigne lorsqu'aucun véhicule ou obstacle n'est détecté à l'avant.

Afin d'obtenir un contrôle à la fois sûr et confortable pour les passagers du premier véhicule, on connaît grâce à la publication n° US9180890-B2 un ACC dit « intelligent » comprenant un générateur de cible, un contrôleur de vitesse et un contrôleur de distance. Le générateur de cible est configuré pour générer une cible dynamique de vitesse et une cible dynamique de distance en fonction de données ou de conditions de circulation acquises en temps réel. On parvient ainsi à réguler la vitesse du premier véhicule et la distance de sécurité entre le premier véhicule et le deuxième véhicule en fonction de l'état de la route, de la forme géométrique de la route, de l'état du trafic, des vitesses maximales autorisées, de la consommation de carburant, et des habitudes de conduite du conducteur.

Toutefois, les systèmes de régulation de distance connus de l'état de la technique ne permettent pas toujours une bonne intégration du véhicule dans un flot de circulation. En particulier, la distance de sécurité entre le premier véhicule et le deuxième véhicule n'est pas toujours choisie de manière adaptée aux conditions de circulation et/ou aux capacités de freinage des autres véhicules. Lorsque la distance de sécurité est trop importante, le comportement du premier véhicule peut surprendre et provoquer des réactions dangereuses chez les autres automobilistes comme par exemple des dépassements dangereux. Lorsque la distance de sécurité est trop faible, un freinage automatique appliqué par le premier véhicule peut être plus important que le freinage du deuxième véhicule. La variation de vitesse du premier véhicule peut alors être plus importante que la variation de vitesse du deuxième véhicule. Cette amplification peut être propagée aux véhicules suivant le premier véhicule et favoriser la formation d'embouteillages.

**Présentation de l'invention**

Le but de l'invention est de fournir un procédé de gestion de la distance de sécurité entre deux véhicules remédiant aux inconvénients ci-dessus et améliorant les procédés de gestion connus de l'art antérieur.

Plus précisément, un premier objet de l'invention est un procédé de gestion de la distance de sécurité entre deux véhicules permettant à un conducteur à la fois une bonne intégration de son véhicule dans un flux de circulation et une maitrise des risques liés à une faible distance de sécurité.

Un deuxième objet de l'invention est un procédé de gestion permettant d'ajuster facilement et efficacement la distance de sécurité ou le délai de sécurité séparant le véhicule du conducteur du véhicule précédent.

**Résumé de l'invention**

L'invention se rapporte à un procédé de gestion d'une distance de sécurité entre un premier véhicule et un deuxième véhicule précédant le premier véhicule, le procédé de gestion comprenant :

- une étape d'identification du deuxième véhicule,
- une étape de détermination d'une capacité maximale de freinage du deuxième véhicule en fonction de son identification,
- une étape de calcul d'une première distance de référence en fonction de la capacité maximale de freinage du deuxième véhicule, la première distance de référence étant égale à une distance de sécurité minimale entre le premier véhicule et le deuxième véhicule pour éviter une collision entre le premier véhicule et le deuxième véhicule si le deuxième véhicule freine avec ladite capacité maximale de freinage,

- une étape de calcul d'une deuxième distance de référence entre le premier véhicule et le deuxième véhicule, la deuxième distance de référence étant égale à une distance de sécurité minimale entre le premier véhicule et le deuxième véhicule garantissant une stabilité en chaîne.

Le procédé de gestion peut comprendre une étape d'affichage sur une interface homme-machine de la première distance de référence et de la deuxième distance de référence et/ou une étape d'affichage sur une interface homme-machine d'un premier délai de référence et d'un deuxième délai de référence, le premier délai de référence étant égal à la première distance de référence divisé par la vitesse du premier véhicule, le deuxième délai de référence étant égal à la deuxième distance de référence divisé par la vitesse du premier véhicule.

La deuxième distance de référence peut être définie de sorte à ce que, lorsque le premier véhicule suit le deuxième véhicule avec une distance de sécurité sensiblement constante et supérieure ou égale à la deuxième distance de référence, la vitesse maximale du premier véhicule est inférieure ou égale à la vitesse maximale du deuxième véhicule et/ou la vitesse minimale du premier véhicule est supérieure ou égale à la vitesse minimale du deuxième véhicule.

L'étape de détermination d'une capacité maximale de freinage du deuxième véhicule en fonction de son identification peut comprendre une sous-étape d'interrogation d'une base de données associant des identifications de véhicule à des capacités de freinage.

L'étape de calcul de la première distance de référence peut comprendre une soustraction d'une distance de freinage du deuxième véhicule à une distance de freinage du premier véhicule.

Le procédé de gestion peut comprendre :

- une étape de sélection d'une distance de sécurité ou d'un délai de sécurité, le délai de sécurité étant égal à la distance de sécurité divisé par la vitesse du premier véhicule,
- une étape d'affichage sur l'interface homme-machine de la distance de sécurité et/ou une étape d'affichage sur l'interface homme-machine du délai de sécurité,
- une étape de comparaison de la distance de sécurité sélectionnée avec la première distance de référence et avec la deuxième distance de référence, et/ou une étape de comparaison du délai de sécurité sélectionné avec le premier délai de référence et avec le deuxième délai de référence.

Le procédé de gestion peut comprendre :

- une étape d'affichage d'un premier indicateur visuel sur une interface homme-machine si la distance de sécurité sélectionnée est supérieure ou égale à la première distance de référence, et/ou
- une étape d'affichage d'un deuxième indicateur visuel sur une interface homme-machine si la distance de sécurité sélectionnée est strictement inférieure à la première distance de référence et supérieure ou égale à la deuxième distance de référence, et/ou
- une étape d'affichage d'un troisième indicateur visuel sur une interface homme-machine si la distance de sécurité sélectionnée est strictement inférieure à la deuxième distance de référence.

L'invention se rapporte également à un produit programme d'ordinateur comprenant des instructions de code de programme enregistrées sur un support lisible par une unité de commande électronique pour mettre en œuvre les étapes du procédé de gestion tel que défini précédemment lorsque ledit programme fonctionne sur une unité de commande électronique.

L'invention se rapporte aussi à un produit programme d'ordinateur téléchargeable depuis un réseau de communication et/ou enregistré sur un support de données lisible par un ordinateur et/ou exécutable par un ordinateur, le produit programme comprenant des instructions qui, lorsque le programme est exécuté par l'ordinateur, conduisent celui-ci à mettre en œuvre le procédé de gestion tel que défini précédemment.

L'invention se rapporte également à un support d'enregistrement de données, lisible par une unité de commande électronique, sur lequel est enregistré un programme d'ordinateur comprenant des instructions de code de programme de mise en œuvre du procédé tel que défini précédemment.

L'invention se rapporte aussi à un support d'enregistrement lisible par ordinateur comprenant des instructions qui, lorsqu'elles sont exécutées par un ordinateur, conduisent celui-ci à mettre en œuvre le procédé de gestion tel que défini précédemment.

L'invention se rapporte également à un signal d'un support de données, portant le produit programme d'ordinateur tel que défini précédemment.

L'invention se rapporte également à un véhicule automobile comprenant des moyens matériels et/ou logiciels mettant en œuvre le procédé de gestion tel que défini précédemment.

**Présentation des figures**

Ces objets, caractéristiques et avantages de la présente invention seront exposés en détail dans la description suivante d'un mode de réalisation particulier fait à titre non-limitatif en relation avec les figures jointes parmi lesquelles :

[Fig. 1] La figure 1 est une vue schématique d'un véhicule automobile selon un mode de réalisation de l'invention.
[Fig. 2] La figure 2 est une vue schématique de dessus d'une route sur laquelle circule le véhicule.
[Fig. 3] La figure 3 est un synoptique d'un procédé de gestion selon un mode de réalisation de l'invention.
[Fig. 4] La figure 4 est un graphique illustrant la distance de sécurité d'un premier véhicule en fonction de sa vitesse et en fonction la capacité de freinage d'un deuxième véhicule précédant le premier véhicule.
[Fig. 5] La figure 5 est une vue schématique d'une boucle de contrôle mise en œuvre dans le procédé de gestion.
[Fig. 6] La figure 6 est une vue schématique d'une interface homme-machine du véhicule.

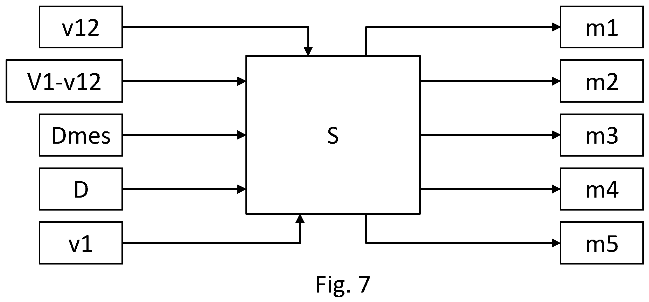

[Fig. 7] La figure 7 est une vue schématique d'un logiciel apte à mettre en œuvre le procédé de gestion.

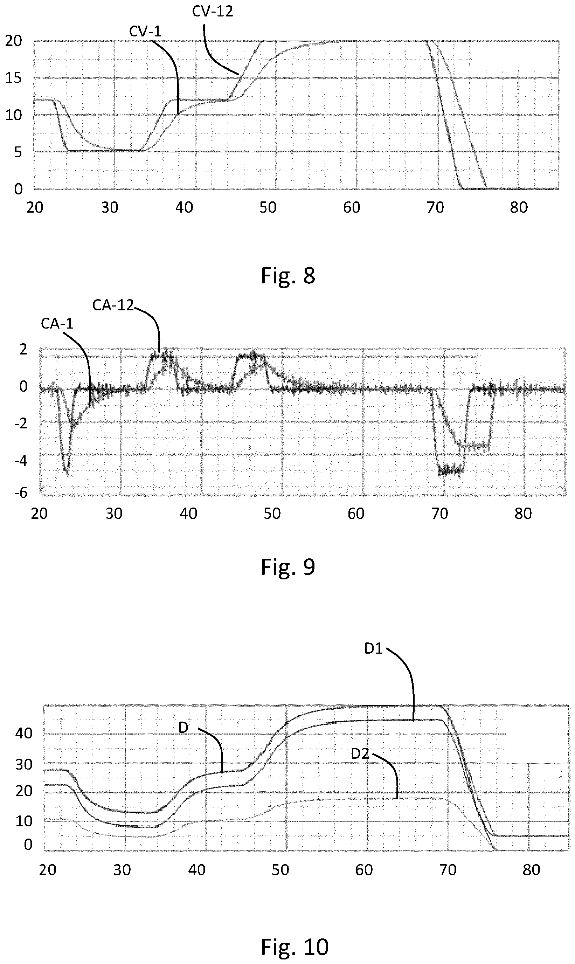

[Fig. 8] La figure 8 est un premier graphique de l'évolution au cours du temps de la vitesse d'un véhicule selon un mode de réalisation de l'invention et d'une cible suivie par ce véhicule.
[Fig. 9] La figure 9 est un premier graphique de l'évolution au cours du temps de l'accélération du véhicule et de la cible suivie par ce véhicule.
[Fig. 10] La figure 10 est un graphique de l'évolution au cours du temps d'une distance de sécurité entre le véhicule et sa cible

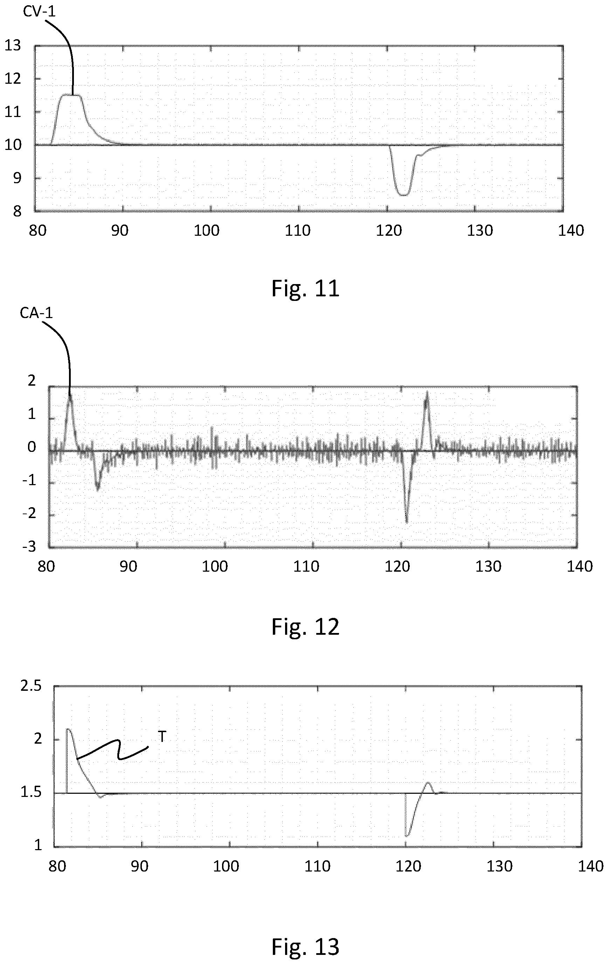

[Fig. 11] La figure 11 est un deuxième graphique de l'évolution au cours du temps de la vitesse du véhicule et de sa cible.
[Fig. 12] La figure 12 est un deuxième graphique de l'évolution de l'accélération au cours du temps du véhicule et de sa cible.
[Fig. 13] La figure 13 est un graphique de l'évolution au cours du temps d'un délai de sécurité entre le premier véhicule et sa cible.

**Description détaillée**

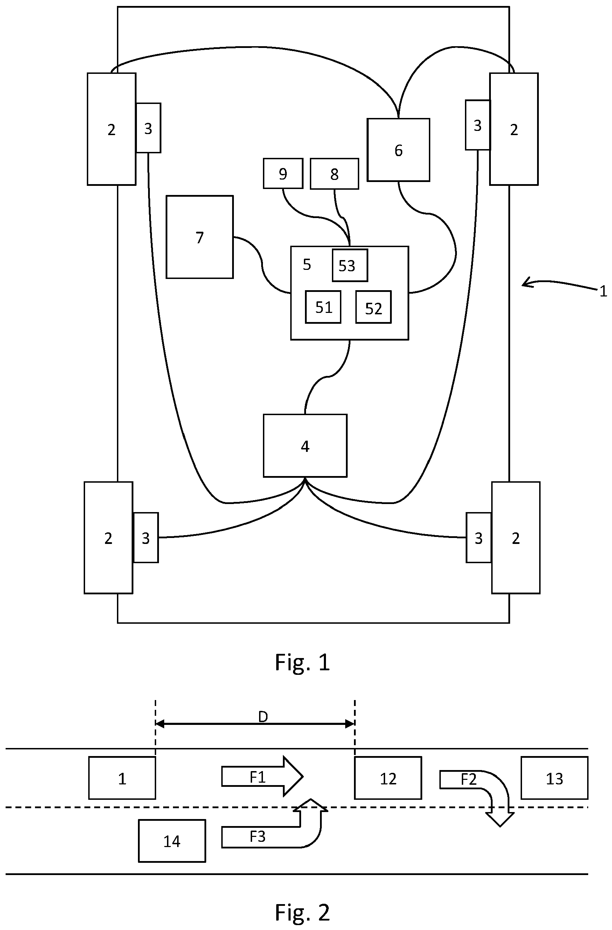

La figure 1 illustre schématiquement un véhicule 1 automobile selon un mode de réalisation de l'invention. Le véhicule 1 peut être de toute nature. Notamment, il peut être par exemple un véhicule particulier, un véhicule utilitaire, un camion ou un bus. Le véhicule 1 peut être un véhicule autonome ou un véhicule contrôlé manuellement. Le véhicule 1 comprend quatre roues 2 équipées chacune d'un moyen de freinage 3. Les moyens de freinage 3 sont reliés à un actionneur 4 du véhicule, lui-même relié directement ou indirectement à une unité de commande électronique 5 du véhicule. Le véhicule 1 comprend en outre un moteur 6 apte à entrainer des roues 2 du véhicule. Le moteur 6 peut être un moteur électrique ou un moteur à combustion. Il est également relié directement ou indirectement à l'unité de commande électronique 5. Le véhicule 1 comprend aussi une interface homme-machine 7, comme par exemple un écran tactile. L'interface homme-machine 7 est apte à afficher des données à l'intention du conducteur du véhicule et elle est apte à recevoir des commandes émises par le conducteur, par exemple par contact de ses doigts sur l'écran tactile. L'interface homme-machine 7 est également reliée directement ou indirectement à l'unité de commande électronique 5. Par ailleurs, le véhicule 1 comprend des moyens de détection 8 de l'environnement du véhicule 1, comme par exemple des radars, et/ou des lidars et/ou des caméras. Les moyens de détection 8 sont notamment aptes à détecter des voies de circulation et des véhicules environnant le véhicule 1. Notamment, les moyens de détection peuvent détecter une cible à l'avant du véhicule 1 Enfin le véhicule 1 comprend un capteur de vitesse 9 du véhicule, comme par exemple un capteur de vitesse de rotation des roues 2 du véhicule. Les moyens de détection 8 et le capteur de vitesse 9 sont également reliés directement ou indirectement à l'unité de commande électronique 5.

L'unité de commande électronique 5 comprend une mémoire 51, un microprocesseur 52 et une interface d'entrée/sortie 53 pour recevoir des données en provenance d'autres équipements du véhicule 1 ou pour émettre des données à l'attention d'autres équipements du véhicule 1. La mémoire 51 de l'unité de commande électronique est un support d'enregistrement de données sur lequel est enregistré un programme d'ordinateur comprenant des instructions de code pour la mise en œuvre d'un procédé selon un mode de réalisation de l'invention. Le microprocesseur 52 est apte à exécuter ce procédé. Notamment, l'unité de commande électronique 6 est apte à envoyer des ordres de commande à l'actionneur 4 via son interface d'entrée/sortie 53 de sorte à actionner les moyens de freinage 3 et ainsi freiner le véhicule. De même, l'unité de commande électronique 6 est apte à envoyer des ordres de commande au moteur 6 via son interface d'entrée/sortie 53 de sorte à accélérer le véhicule. L'unité de commande électronique 5 et les moyens de détection 8 forment ensemble un système de régulation de distance qui est apte à interagir avec l'actionneur 4 et avec le moteur 6 pour suivre une cible donnée.

La figure 2 illustre en vue de dessus le véhicule 1 circulant sur une route. Le sens de circulation est indiqué par une flèche F1. Le véhicule 1 suit un deuxième véhicule 12 qui suit lui-même un troisième véhicule 13. Le véhicule 12 est donc une cible que suit le véhicule 1. Les véhicules 1, 12 et 13 circulent dans le même sens sur une même première voie de circulation. La route comprend en outre une deuxième voie de circulation, parallèle à la première voie de circulation, sur laquelle circule un quatrième véhicule 14.

Dans une première configuration, c'est-à-dire dans une première situation, chacun des quatre véhicules 1, 12, 13 et 14 circulent en ligne droite, sans changer de file. Dans une deuxième configuration, le véhicule 12 quitte sa voie de circulation suivant la flèche F2. Le véhicule précédant le premier véhicule 1 devient donc le troisième véhicule 13. Cette deuxième configuration, dite de "cut-out" illustre donc une situation de changement de cible suivie par le véhicule 1 dans laquelle la nouvelle cible est plus éloignée du véhicule 1 que la précédente cible. Dans une troisième configuration, le véhicule 13 quitte sa voie de circulation et s'insère devant le véhicule 1 suivant la flèche F3. Le véhicule précédent le premier véhicule 1 devient donc le quatrième véhicule 14. Cette troisième configuration, dite de "cut-in", illustre donc une situation de changement de cible suivie par le véhicule 1 dans laquelle la nouvelle cible est plus rapprochée du véhicule 1 que la précédente cible.

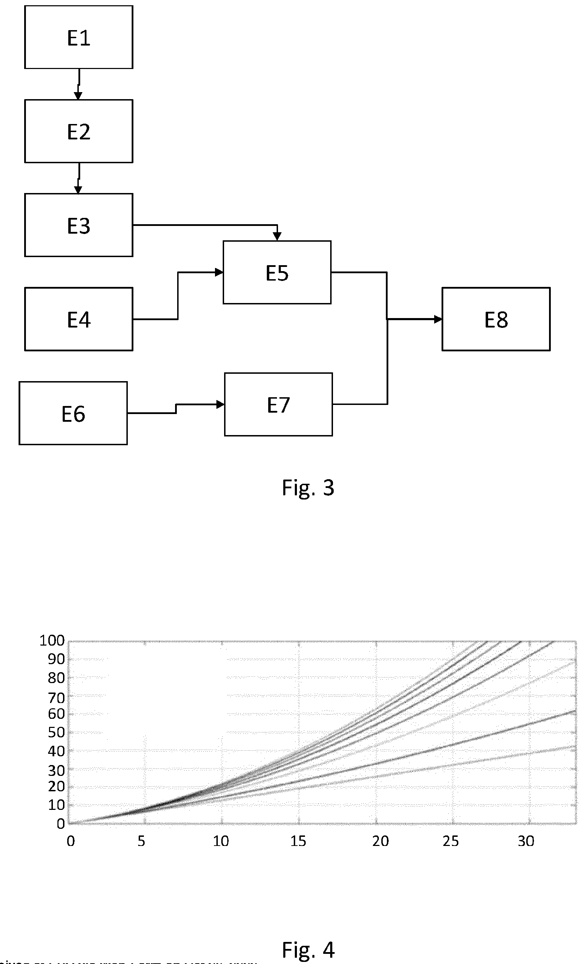

La figure 3 illustre un synoptique d'un procédé de gestion d'un freinage autonome d'urgence du premier véhicule 1 selon un mode de réalisation de l'invention. Le procédé de gestion est expliqué en appui de la première configuration décrite ci-dessus, c'est-à-dire que le premier véhicule 1 suit le deuxième véhicule 12 et aucun de ces deux véhicules ne change de file.

Dans une première étape E1, on identifie le deuxième véhicule 12. L'identification du deuxième véhicule peut être réalisée avec le moyen de détection 8 en lien avec l'unité de commande électronique 5. Non seulement on détecte la présence du deuxième véhicule mais aussi on détecte son type. Le type du deuxième véhicule 12 peut être identifié parmi une liste de types de véhicule dans laquelle pourrait figurer par exemple le type "véhicule particulier", le type "moto", le type "véhicule utilitaire", le type "camion" ou encore le type "bus". L'étape d'identification pourrait également conduire à identifier plus précisément le deuxième véhicule, notamment la marque et le modèle du deuxième véhicule. L'identification du deuxième véhicule peut par exemple s'appuyer sur la reconnaissance d'une silhouette apparente du deuxième véhicule ou d'un gabarit du deuxième véhicule. L'identification du deuxième véhicule pourrait également être obtenue en reconnaissant une plaque d'immatriculation du deuxième véhicule et en consultant un registre associant des numéros de plaque d'immatriculation à un type, une marque ou un modèle de véhicule. En outre, lors de cette première étape, on peut également déterminer la vitesse v2 du deuxième véhicule 12.

Dans une deuxième étape E2, on détermine une capacité maximale de freinage du deuxième véhicule 12 en fonction de son identification. La capacité de freinage d'un véhicule désigne la décélération maximale que peut atteindre le deuxième véhicule 12 en actionnant ses propres moyens de freinage à pleine puissance pour des conditions extérieures données. Elle peut être exprimée en mètre par seconde carré (m/s2). La capacité de freinage dépend de type de frein utilisé dans la voiture ainsi que sa propre dynamique. Elle est une valeur constante associée au véhicule. La distance de freinage est dépendante de la vitesse du véhicule et de sa capacité de freinage. La capacité de freinage peut être inversement proportionnelle à une distance de freinage du véhicule pour une vitesse du véhicule donnée. En remarque, pour une vitesse donnée, la capacité de freinage d'un véhicule particulier est généralement strictement supérieure à la capacité de freinage d'un véhicule utilitaire, elle-même strictement supérieure à la capacité de freinage d'un camion ou d'un bus. Pour déterminer la capacité maximale de freinage du deuxième véhicule 12, on peut par exemple interroger une base de données associant des identifications de véhicule à des capacités de freinage. Par exemple, la base de données peut comprendre une capacité de freinage associée à chaque type de véhicule. En variante, elle peut comprendre une capacité de freinage associée à une marque et à un modèle de véhicule particulier. Selon une autre variante de réalisation, la base de données comprend une capacité de freinage associée à un gabarit du deuxième véhicule, notamment sa largeur et/ou sa hauteur. La base de données peut être enregistrée dans la mémoire 51 de l'unité de commande électronique 5. En variante, elle pourrait être accessible sur un serveur informatique avec lequel le véhicule 1 peut communiquer. A l'issue de la deuxième étape E2, on dispose donc d'une estimation de la capacité de freinage du deuxième véhicule. Selon une autre variante de réalisation, la capacité de freinage du deuxième véhicule n'est pas estimée en interrogeant une base de données mais suite à une phase d'observation de décélérations du deuxième véhicule.

Dans une troisième étape E3, on calcule une première distance de référence D1 en fonction de la capacité maximale de freinage du deuxième véhicule. La première distance de référence est égale à une distance de sécurité minimale entre le premier véhicule 1 et le deuxième véhicule 12 pour éviter une collision entre le premier véhicule 1 et le deuxième véhicule 12 si le deuxième véhicule freine avec la capacité maximale de freinage déterminée lors de la deuxième étape E2.

La première distance de référence D1 peut comprendre une soustraction d'une distance de freinage du deuxième véhicule à une distance de freinage du premier véhicule. Elle peut donc être calculée avec la formule suivante :

[Math 1]

$$D1 = D_{stop,1} - D_{stop,2}$$

Dans laquelle :

- Dstop,1 désigne la distance de freinage du premier véhicule 1 à sa capacité de freinage maximale.
- Dstop,2 désigne la distance de freinage du deuxième véhicule 12 à la capacité de freinage calculée lors de la deuxième étape E2.

La valeur de Dstop,1 peut être calculée avec la formule suivante :

[Math 2]

$$d_{stop,1} = \frac{v_1^2(t_0)}{2B_{max,1}} + v_1(t_0)\left(T + \frac{B_{max,1}}{2J_{max,1}}\right) - \frac{B_{max,1}^3}{24J_{max,1}^2}$$

Dans laquelle :

- v1(t0) désigne la vitesse du premier véhicule à l'instant de l'exécution du procédé de gestion t0.
- Bmax,1 désigne la capacité de freinage du premier véhicule 1.
- T désigne un délai de réaction du premier véhicule pour initier le freinage.
- Jmax, 1 désigne la variation d'accélération maximale (également dénommée "Jerk" ou secousse) du véhicule 1.

La valeur de Dstop,2 peut être calculée avec la formule suivante :

[Math 3]

$$d_{stop,2} = \frac{v_2^2(t_0)}{2B_{max,2}}$$

Dans laquelle :

- v2(t0) désigne la vitesse du deuxième véhicule à l'instant de l'exécution du procédé de gestion t0.
- Bmax,2 désigne la capacité de freinage du deuxième véhicule 12 estimé lors de la deuxième étape E2.

La figure 4 est un graphique illustrant une distance de sécurité (exprimée en mètres) à respecter en fonction de la vitesse du véhicule 1 (exprimée en mètres par seconde) et en fonction de la capacité de freinage du véhicule précédant le véhicule 1. La distance de freinage d'un véhicule est la distance parcourue par le véhicule entre le commencement du freinage et l'arrêt complet du véhicule. Dans ce graphique, la capacité de freinage du premier véhicule 1 est supposée être égale à 3.5m/s2. Le graphique comprend huit courbes correspondant à huit hypothèses de capacité de freinage du deuxième véhicule, à savoir 3.5 m/s2, 4 m/s2, 5 m/s2, 6 m/s2, 7 m/s2, 8 m/s2, 9 m/s2, et 10 m/s2. Pour une vitesse donnée, plus la capacité de freinage du deuxième véhicule est importante (ou plus généralement, plus la différence de la capacité de freinage du deuxième véhicule mois la capacité de freinage du premier véhicule est importante), et plus la distance de distance de sécurité doit être importante.

Dans une quatrième étape E4 on calcule une deuxième distance de référence entre le premier véhicule 1 et le deuxième véhicule 12. La deuxième distance de référence D2 est égale à une distance de sécurité minimale entre le premier véhicule 1 et le deuxième véhicule 12 garantissant une stabilité en chaîne. Lorsque le premier véhicule suit le deuxième véhicule avec une distance de sécurité sensiblement constante et supérieure ou égale à la deuxième distance de référence D2, la vitesse maximale du premier véhicule est inférieure ou égale à la vitesse maximale du deuxième véhicule et/ou la vitesse minimale du premier véhicule est supérieure ou égale à la vitesse minimale du deuxième véhicule. Autrement dit, les variations de vitesse du deuxième véhicule ne sont pas amplifiées par le premier véhicule mais au contraire elles sont atténuées par le premier véhicule. L'atténuation des variations de vitesses du deuxième véhicule par le premier véhicule réduisent le risque de formation d'un embouteillage derrière le premier véhicule 1.

La première distance de référence D1 est une distance dite "sans collision dans la mesure où, lorsque le premier véhicule respecte une distance de sécurité égale à la première distance de référence, il peut éviter de percuter le véhicule précédant en utilisant ses capacités de freinage maximale, même si le véhicule précédant freine aussi avec sa capacité de freinage maximale. Au contraire, la deuxième distance de référence D2 n'est pas une distance "sans collision". Lorsque le premier véhicule respecte une distance de sécurité égale à la deuxième distance de référence, il peut éviter de percuter le véhicule précédant en utilisant ses capacités de freinage maximale, à condition que le véhicule précédant freine avec une capacité de freinage inférieure à sa capacité de freinage maximale, par exemple avec une capacité de freinage de 3.5m/s2. Lorsqu'on applique une distance de sécurité égale à la deuxième distance de référence D2, on suppose que le véhicule 12 conduira dans une plage d'accélération de confort, présentant la même dynamique que le véhicule 1. Autrement dit, la première distance de référence D1 est calculé avec un objectif de sécurité mais la deuxième distance de référence D2 est calculé avec un objectif de confort.

La deuxième distance de référence D2 peut être calculée en utilisant un algorithme dans lequel on détermine trois paramètres kpi, kdi et kii, d'un régulateur proportionnel intégral dérivé, également dénommé régulateur PID, pour minimiser un délai de stabilité en chaîne Hmin. Hmin représente l'intervalle de temps minimal entre les véhicules pour garantir la stabilité des cordes. Une fois le délai de stabilité en chaîne Hmin calculé en fonction de kpi, kdi et kii, D2 est calculé en multipliant cette valeur par la vitesse du véhicule 1. La deuxième distance de référence D2 est donc calculée avec la formule suivante:

[Math 4]

$$D2 = h_{min}v_1$$

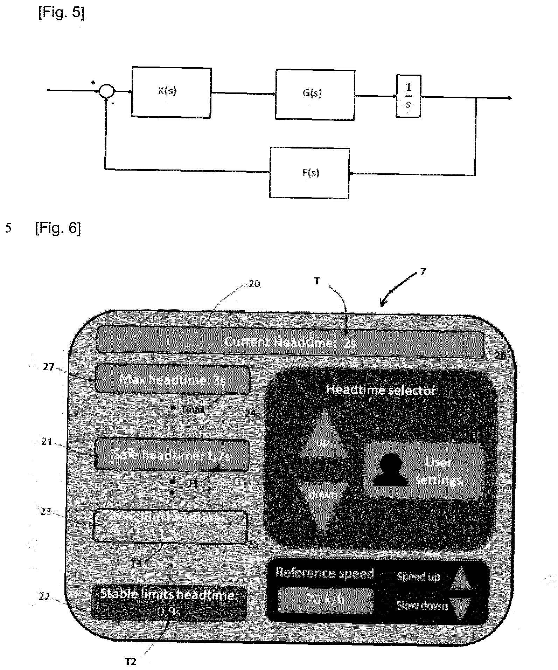

Le régulateur PID, illustré sur la figure 5, peut faire intervenir des fonctions de transfert K(s), G(s) et F(s), s désignant une transformée de Laplace du temps t. La fonction F(s) peut être définie de la manière suivante :

[Math 5]

$$F(s) = h_{min}s + 1$$

Dans laquelle Hmin désigne le délai de stabilité en chaîne minimal, c'est-à-dire, le plus court délai séparant les véhicules 1 et 12 pour garantir une stabilité en chaîne

La fonction G(s) peut être définie de la manière suivante :

[Math 6]

$$G(s) = \frac{w_n^2}{s^2 + 2\zeta w_n s + w_n^2}$$

Dans laquelle :

- Wn désigne la fréquence naturelle du véhicule 1.
- $\zeta$ désigne le facteur d'amortissement du véhicule 1.

La fonction K(s) peut être définie de la manière suivante :

[Math 7] $$K(s) = k_{p,i} + k_{d,i}s + \frac{k_{i,i}}{s}$$

Dans laquelle kpi, kdi et kii sont les trois paramètres du régulateur PID à minimiser.

Dans une cinquième étape E5, on affiche sur l'interface homme-machine 7 la première distance de référence D1 et la deuxième distance de référence D2. Selon une variante de réalisation avantageuse, on affiche sur l'interface homme-machine à la place de la première distance de référence D1, un premier délai de référence T1 égal à la première distance de référence D1 divisé par la vitesse du premier véhicule. On affiche également à la place de la deuxième distance de référence D2, un deuxième délai de référence T2 égal à la deuxième distance de référence D2 divisé par la vitesse du premier véhicule. Le deuxième délai de référence T2 peut être égal au délai de stabilité en chaîne Hmin. L'affichage d'un délai plutôt que d'une distance est plus intelligible pour le conducteur du premier véhicule. En effet, les délais de référence T1 et T2 peuvent être moins sensibles aux variations de vitesse du premier véhicule. Les délais T1 et T2 sont moins susceptibles de varier lorsque que le premier véhicule accélère ou décélère. Les délais de référence peuvent également être plus facilement comparés avec un délai de sécurité préconisés pour la sécurité routière, notamment un délai de sécurité de deux secondes.

La figure 6 illustre un mode de réalisation de l'interface homme-machine sous la forme d'un écran tactile 20. L'écran tactile 20 comprend un premier champ 21 affichant le premier délai de référence T1 et un deuxième champ 22 affichant le deuxième délai de référence T2. La première distance de référence est strictement supérieure à la deuxième distance de référence, par conséquent le premier délai de référence T1 est strictement supérieur au deuxième délai de référence T2. Optionnellement, on peut également afficher dans un troisième champ 23 une valeur moyenne T3 entre le premier délai de référence T1 et le deuxième délai de référence T2.

Dans une sixième étape E6, on sélectionne une distance de sécurité D ou un délai de sécurité T. Cette sélection peut être réalisée manuellement par le conducteur au moyen de l'interface homme-machine 7. En référence à la figure 6, l'écran 20 comprend un premier bouton 24 pour incrémenter le délai de sécurité, par exemple par palier de 0.1 seconde, et un deuxième bouton 25 pour décrémenter le délai de sécurité, par exemple par palier de 0.1 seconde. Il comprend aussi un troisième bouton 26 pour sélectionner un délai de sécurité préalablement mémorisé selon les préférences d'un utilisateur du véhicule. L'interface homme-machine pourrait également être configurée pour sélectionner un délai de sécurité égal au premier délai de référence T1 ou égal au deuxième délai de référence T2. Ensuite, la distance de sécurité sélectionné (ou respectivement le délai de sécurité sélectionné) servira de consigne pour réguler la distance séparant le premier véhicule du deuxième véhicule.

Dans une septième étape E7, on affiche sur l'interface homme-machine 7 la distance de sécurité D et/ou le délai de sécurité sélectionné lors de la sixième étape E6. En référence à la figure 6, le délai de sécurité T est affiché dans un champ 26. En remarque, on peut également afficher dans un champ 27 de l'écran 20, un délai Tmax correspondant au délai de sécurité maximal sélectionnable. Par ailleurs, l'affichage des délais de référence T1 et T2 et du délai de sécurité T (ou respectivement des distances de référence D1 et D2 et de la distance de sécurité D) peut même être effectuée lorsque la régulation de distance est désactivée, c'est-à-dire même lorsque le conducteur contrôle manuellement la vitesse de son véhicule et donc la position de son véhicule par rapport au véhicule le précédent (on affiche alors la distance de sécurité ou respectivement le délai de sécurité effectif entre le premier véhicule et le deuxième véhicule). Dans une huitième étape E8, on compare la distance de sécurité D sélectionnée avec la première distance de référence D1 et avec la deuxième distance de référence D2, et/ou on compare le délai de sécurité T sélectionné avec le premier délai de référence T1 et avec le deuxième délai de référence T2. Comme le délai de sécurité et les délais de références sont obtenus par une division respectivement de la distance de sécurité et des distances de référence par la vitesse du premier véhicule 1, le résultat de la comparaison sera identique que l'on compare la distance de sécurité aux distances de référence ou que l'on compare le délai de sécurité aux délais de référence. Par exemple, si la distance de sécurité est strictement supérieure à la première distance de référence, le délai de référence est alors également strictement supérieur au premier délai de référence.

Si la distance de sécurité D sélectionnée est supérieure ou égale à la première distance de référence D1, on affiche un premier indicateur visuel sur l'interface homme-machine 7. Par exemple, le premier indicateur visuel peut être une couleur du champ 26 dans lequel est affiché le délai de sécurité. Lorsque le conducteur du véhicule 1 sélectionne une distance de sécurité supérieure ou égale à la première distance de référence, il n'y a pas de risque de collision avec le deuxième véhicule v2, même si celui-ci freine subitement à pleine puissance. La couleur du champ 26 pourra être par exemple affichée en vert.

Si la distance de sécurité D sélectionnée est strictement inférieure à la première distance de référence D1 et supérieure ou égale à la deuxième distance de référence D2, on affiche un deuxième indicateur visuel sur l'interface homme-machine 7. Avec une telle distance de sécurité, il existe un risque de collision avec le deuxième véhicule v2 si celui-ci freine subitement à pleine puissance. Par contre cette distance de sécurité permet d'obtenir une stabilité en chaine si le deuxième véhicule freine modérément. C'est-à-dire qu'en cas de freinage du deuxième véhicule inférieur à 3.5 m/s2, la décélération du premier véhicule pourra être plus faible que la décélération du deuxième véhicule et on pourra réduire le risque de formation d'un embouteillage derrière le premier véhicule 1. Dans ce cas, la couleur du champ 26 pourra être affichée par exemple en jaune ou en orange, pour indiquer un niveau de risque intermédiaire.

Si la distance de sécurité D sélectionnée est strictement inférieure à la deuxième distance de référence, on affiche un troisième indicateur visuel sur l'interface homme-machine 7. Dans ce cas, la distance de sécurité (ou respectivement le délai de sécurité) est particulièrement faible et la sécurité des passagers du premier véhicule n'est plus assurée. Notamment, en cas de freinage d'intensité ordinaire ou habituelle du deuxième véhicule, un freinage de plus forte intensité, voire un freinage d'urgence devra être déclenché par le premier véhicule pour éviter une collision avec le deuxième véhicule. Une telle réaction pourrait donc augmenter le risque que le premier véhicule soit percuté à l'arrière par un véhicule le suivant, ou bien pourrait augmenter le risque de formation d'un embouteillage derrière le premier véhicule. Dans ce cas, la couleur du champ 26 pourra être affichée par exemple en rouge, pour indiquer un niveau de risque élevé.

Selon une variante de réalisation de l'invention, la distance de sécurité D pourrait non pas être sélectionnée par un utilisateur du véhicule mais être calculée automatiquement par l'unité de contrôle électronique. La distance de sécurité D pourrait par exemple être égale à la première distance de référence D1 ou à la deuxième distance de référence D2 selon un mode de conduite choisi par l'utilisateur du véhicule. Elle pourrait également être calculée par une moyenne des deux distances D1 et D2.

Grâce à l'invention, le conducteur dispose d'une information calculée en temps réel permettant d'évaluer un risque associé à une distance de sécurité séparant son véhicule du véhicule le précédant. Il peut également facilement ajuster la distance de sécurité en fonction de distances de référence calculée par l'unité de commande électronique. Il peut aussi facilement adapter la distance de sécurité aux capacités de freinage du véhicule le précédant et ainsi bien s'insérer dans un flux de circulation.

## Revendications

1. Procédé de gestion d'une distance de sécurité (D) entre un premier véhicule (1) et un deuxième véhicule (12) précédant le premier véhicule (1), **caractérisé en ce qu'**il comprend :

   - une étape d'identification (E1) du deuxième véhicule (12),
   - une étape de détermination (E2) d'une capacité maximale de freinage du deuxième véhicule (12) en fonction de son identification,
   - une étape de calcul (E3) d'une première distance de référence (D1) en fonction de la capacité maximale de freinage du deuxième véhicule (12), la première distance de référence (D1) étant égale à une distance de sécurité minimale entre le premier véhicule (1) et le deuxième véhicule (12) pour éviter une collision entre le premier véhicule (1) et le deuxième véhicule (12) si le deuxième véhicule (12) freine avec la dite capacité maximale de freinage,
   - une étape de calcul (E4) d'une deuxième distance de référence (D2) entre le premier véhicule (1) et le deuxième véhicule (12), la deuxième distance de référence (D2) étant égale à une distance de sécurité minimale entre le premier véhicule (1) et le deuxième véhicule (12) garantissant une stabilité en chaîne.

2. Procédé de gestion selon la revendication précédente, **caractérisé en ce qu'**il comprend une étape d'affichage (E5) sur une interface homme-machine (7) de la première distance de référence (D1) et de la deuxième distance de référence (D2) et/ou une étape d'affichage sur une interface homme-machine (7) d'un premier délai de référence (T1) et d'un deuxième délai de référence (T2), le premier délai de référence (T1) étant égal à la première distance de référence (D1) divisé par la vitesse (v1) du premier véhicule (1), le deuxième délai de référence (T2) étant égal à la deuxième distance de référence (D2) divisé par la vitesse (v1) du premier véhicule (1).

3. Procédé de gestion selon la revendication précédente, **caractérisé en ce que** la deuxième distance de référence (D2) est définie de sorte à ce que, lorsque le premier véhicule (1) suit le deuxième véhicule (12) avec une distance de sécurité sensiblement constante et supérieure ou égale à la deuxième distance de référence, la vitesse maximale du premier véhicule (1) est inférieure ou égale à la vitesse maximale du deuxième véhicule (12) et/ou la vitesse minimale du premier véhicule (1) est supérieure ou égale à la vitesse minimale du deuxième véhicule (12).

4. Procédé de gestion selon l'une des revendications précédentes, **caractérisé en ce que** l'étape de détermination (E2) d'une capacité maximale de freinage du deuxième véhicule (12) en fonction de son identification comprend une sous-étape d'interrogation d'une base de données associant des identifications de véhicule à des capacités de freinage.

5. Procédé de gestion selon l'une des revendications précédentes, **caractérisé en ce que** l'étape de calcul (E3) de la première distance de référence comprend une soustraction d'une distance de freinage ($D_{stop,2}$) du deuxième véhicule (12) à une distance de freinage ($D_{stop,1}$) du premier véhicule (1).

6. Procédé de gestion selon l'une des revendications précédentes, **caractérisé en ce qu'**il comprend :

   - une étape de sélection (E6) d'une distance de sécurité (D) ou d'un délai de sécurité (T), le délai de sécurité (D) étant égal à la distance de sécurité (T) divisé par la vitesse (v1) du premier véhicule (1),
   - une étape d'affichage (E7) sur une interface homme-machine (7) de la distance de sécurité (D) et/ou une étape d'affichage sur l'interface homme-machine (7) du délai de sécurité (T),

- une étape de comparaison (E8) de la distance de sécurité (D) sélectionnée avec la première distance de référence (D1) et avec la deuxième distance de référence (D2), et/ou une étape de comparaison du délai de sécurité (T) sélectionné avec le premier délai de référence (T1) et avec le deuxième délai de référence (T2).

**7.** Procédé de gestion selon l'une des revendications précédentes, **caractérisé en ce qu'**il comprend :

- une étape d'affichage d'un premier indicateur visuel sur une interface homme-machine (7) si la distance de sécurité (D) sélectionnée est supérieure ou égale à la première distance de référence (D1), et/ou
- une étape d'affichage d'un deuxième indicateur visuel sur une interface homme-machine (7) si la distance de sécurité (D) sélectionnée est strictement inférieure à la première distance de référence (D1) et supérieure ou égale à la deuxième distance de référence (D2), et/ou
- une étape d'affichage d'un troisième indicateur visuel sur une interface homme-machine (7) si la distance de sécurité sélectionnée est strictement inférieure à la deuxième distance de référence (D2).

**8.** Produit programme d'ordinateur comprenant des instructions de code de programme enregistrées sur un support (51) lisible par une unité de commande électronique (5) pour mettre en œuvre les étapes du procédé de gestion selon l'une quelconque des revendications 1 à 7 lorsque ledit programme fonctionne sur une unité de commande électronique (5).

**9.** Support d'enregistrement de données (51), lisible par une unité de commande électronique, sur lequel est enregistré un programme d'ordinateur comprenant des instructions de code de programme de mise en œuvre du procédé selon l'une des revendications 1 à 7.

**10.** Véhicule (1) automobile, **caractérisé en ce qu'**il comprend des moyens matériels (4, 5, 6, 7, 8) et/ou logiciels mettant en œuvre le procédé de gestion selon l'une des revendications 1 à 7.

Fig. 1

Fig. 2

Fig. 3

Fig. 4

[Fig. 5]

[Fig. 6]

Fig. 7

Fig. 8

Fig. 9

Fig. 10

Fig. 11

Fig. 12

Fig. 13

EP 3 789 259 A1

**Europäisches Patentamt**
**European Patent Office**
**Office européen des brevets**

# RAPPORT DE RECHERCHE EUROPEENNE

**Numéro de la demande**

EP 20 19 2100

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | DE 10 2013 013232 A1 (MAN TRUCK & BUS AG [DE]) 12 février 2015 (2015-02-12) * alinéas [0013] - [0017], [0052] - [0071] * ----- | 1-10 | INV. B60W30/16 B60W50/14 |
| Y | DE 28 33 687 A1 (BOSCH GMBH ROBERT) 21 février 1980 (1980-02-21) * pages 3-7 * ----- | 1-10 | |
| Y | US 2013/187771 A1 (ROTHSCHILD LEIGH M [US]) 25 juillet 2013 (2013-07-25) * alinéas [0008] - [0010] * ----- | 2,3,6,7 | |
| A | US 5 850 176 A (KINOSHITA MASAHIRO [JP] ET AL) 15 décembre 1998 (1998-12-15) * colonne 2, lignes 7-31 * ----- | 1-10 | |

**DOMAINES TECHNIQUES RECHERCHES (IPC)**

B60W
B60K

Le présent rapport a été établi pour toutes les revendications

| Lieu de la recherche | Date d'achèvement de la recherche | Examinateur |
|---|---|---|
| Munich | 20 janvier 2021 | Nielles, Daniel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................
& : membre de la même famille, document correspondant

EPO FORM 1503 03.82 (P04C02)

17

**ANNEXE AU RAPPORT DE RECHERCHE EUROPEENNE
RELATIF A LA DEMANDE DE BREVET EUROPEEN NO.**

EP 20 19 2100

20-01-2021

| Document brevet cité au rapport de recherche | Date de publication | Membre(s) de la famille de brevet(s) | | Date de publication |
|---|---|---|---|---|
| DE 102013013232 A1 | 12-02-2015 | AUCUN | | |
| DE 2833687 A1 | 21-02-1980 | AUCUN | | |
| US 2013187771 A1 | 25-07-2013 | AUCUN | | |
| US 5850176 A | 15-12-1998 | DE | 19729613 A1 | 22-01-1998 |
| | | GB | 2315179 A | 21-01-1998 |
| | | JP | 3805832 B2 | 09-08-2006 |
| | | JP | H1027300 A | 27-01-1998 |
| | | US | 5850176 A | 15-12-1998 |

EPO FORM P0460

**EP 3 789 259 A1**

**RÉFÉRENCES CITÉES DANS LA DESCRIPTION**

**Documents brevets cités dans la description**

- US 9180890 B2